# EUROPEAN PATENT APPLICATION

(11) **EP 2 455 787 A1**
(43) Date of publication of application: **23.05.2012**
(21) Application number: 10799842.9
(22) Date of filing: 13.07.2010
(51) Int. Cl.: G02B 5/30, B32B 7/02

(54) **PROCESS FOR PRODUCTION OF LAMINATE, AND LAMINATE**

(30) Priority: 15.07.2009 JP 2009167213
(71) Applicant: Asahi Glass Company, Limited, Tokyo 100-8405 (JP)
(72) Inventor: YAMAMOTO, Yuji, Tokyo 100-8405 (JP); KAIDA, Yuriko, Tokyo 100-8405 (JP); KOGUCHI, Ryohei, Tokyo 100-8405 (JP); SAKURAI, Hiromi, Tokyo 100-8405 (JP)
(74) Representative: Müller-Boré & Partner Patentanwälte
(86) International application number: PCT/JP2010/061850
(87) International publication number: WO 2011/007784

(57) **Abstract**

A novel laminate comprising at least two polymer liquid crystal layers, and its production process are provided.

A process for producing a laminate comprising a first transparent resin layer, a first polymer liquid crystal layer, a second transparent resin layer and a second polymer liquid crystal layer, which comprises curing a curable resin in a state where it is in contact with a mold to form a surface having liquid crystal alignment properties by transcription of the mold thereby to form the first transparent resin layer; then forming a layer of a curable liquid crystalline monomer or a crosslinkable polymer liquid crystal on the surface having liquid crystal alignment properties of the first transparent resin layer, followed by curing or crosslinking in a state where the liquid crystal is aligned to form the first polymer liquid crystal layer; and further forming a second transparent resin layer and a second polymer liquid crystal layer on the first polymer liquid crystal layer side in the same manner as above, wherein at the time of forming the second transparent resin layer, the liquid crystal alignment direction of the surface is adjusted to be different from the liquid crystal alignment direction of the surface of the first transparent resin layer. In addition, a laminate comprising a first transparent resin layer having liquid crystal alignment properties on its surface in contact with a first polymer liquid crystal layer, the first polymer liquid crystal layer, a second transparent resin layer having liquid crystal alignment properties in a direction different from the first transparent resin layer surface on its surface in contact with a second polymer liquid crystal layer, and the second polymer liquid crystal layer.

## Description

### TECHNICAL FIELD

The present invention relates to a process for producing a laminate, and a laminate.

### BACKGROUND ART

As for a process for producing a laminate and a laminate, various techniques have been disclosed.

For example, JP-A-2004-226752 (Patent Document 1) discloses a process for producing an optical laminate, which comprises at least respective steps of (1) a first step of bonding a liquid crystal substance layer 1 having liquid crystal alignment formed on an alignment substrate fixed to a removable substrate 1 via an adhesive layer 1, separating the alignment substrate and transcribing the liquid crystal substance layer 1 on the removable substrate 1 to obtain a laminate (A) comprising removable substrate 1/adhesive layer 1/liquid crystal substance layer 1, (2) a second step of transcribing a liquid crystal substance layer 2 on a removable substrate 2 in the same manner as the laminate (A) to obtain a laminate (B) comprising removable substrate 2/adhesive layer 2/liquid crystal substance layer 2, (3) a third step of bonding the laminate (A) and the laminate (B) via a pressure-sensitive adhesive/adhesive layer to obtain a laminate comprising removable substrate 1/adhesive layer 1/liquid crystal substance layer 1/pressure-sensitive adhesive (adhesive) layer/liquid crystal substance layer 2/adhesive layer 2/removable substrate 2, and (4) a fourth step of separating the removable substrate 1 and the removable substrate 2 in the above laminate and bonding a polarizing plate to the adhesive layer 1 or the adhesive layer 2, an elliptically polarizing plate or a circularly polarizing plate comprising an optical laminate obtained by the above production process, and the like.

Further, as for a liquid crystal alignment method or a liquid crystal molecules alignment method, some techniques have been disclosed.

For example, JP-A-6-43458 (Patent Document 2) discloses a liquid crystal alignment method which comprises contact-bonding a member having uniaxiality to at least one of substrates and then removing it to align a liquid crystal sandwiched between the substrates, the above liquid crystal alignment method wherein an organic film is provided on the substrate and then the above member having uniaxiality is contact-bonded, the liquid crystal alignment method wherein the member having uniaxiality is a member subjected to rubbing treatment, a liquid crystal element produced utilizing the above liquid crystal alignment method, and the like.

Further, for example, JP-A-8-313910 (Patent Document 3) discloses a liquid crystal molecules alignment method to align liquid crystal molecules without applying rubbing treatment directly to a substrate, which comprises (a) a step of laminating a substrate and a member having liquid crystal molecules alignment properties so that a (meth)acrylate type energy rays-curable resin composition is sandwiched so as to be in contact with a face having liquid crystal molecules alignment properties of the member, (b) a step of applying energy rays from the upper surface and/or the bottom surface of the member having liquid crystal molecules alignment properties, and (c) a step of separating the member having liquid crystal molecules alignment properties and aligning the liquid crystal molecules, the liquid crystal molecules alignment method wherein the member having liquid crystal molecules alignment properties is an oriented resin film, a rubbed resin film or a resin film having anisotropy imparted to the surface by irradiation with linearly polarized light, a laminate comprising a substrate and a layer having liquid crystal molecules alignment properties transcribed thereon, made of a (meth)acrylate type energy rays-curable resin, and the like.

### PRIOR ART DOCUMENTS

### PATENT DOCUMENTS

- Patent Document 1:: JP-A-2004-226752
- Patent Document 2:: JP-A-6-43458
- Patent Document 3:: JP-A-8-313910

### DISCLOSURE OF INVENTION

### TECHNICAL PROBLEM

The process for producing a laminate having a liquid crystal layer disclosed in Patent Document 1 is a complicated process comprising many steps, and a simpler production process has been desired. A first object of the present invention is to provide a novel process for producing a laminate.

Further, as a laminate having a liquid crystal layer, a laminate having higher optical properties is also desired. A second object of the present invention is to provide a novel laminate having high optical properties.

### SOLUTION TO PROBLEM

The present invention provides the following.
[1] A process for producing a laminate comprising a first transparent resin layer, a first polymer liquid crystal layer, a second transparent resin layer and a second polymer liquid crystal layer, which comprises (1) forming a layer of a first curable resin in contact with a mold face having liquid crystal alignment properties, curing the first curable resin in a state where it is in contact with the mold face to form it into a transparent resin, and separating the mold to form the first transparent resin layer having a face (a) having liquid crystal alignment properties formed by transcription of the mold surface; (2) forming a layer of a liquid crystalline monomer on the face (a) of the first transparent resin layer and aligning the liquid crystalline monomer, and polymerizing the liquid crystalline monomer in a state where the liquid crystalline monomer is aligned, or forming a layer of a crosslinkable polymer liquid crystal on the face (a) of the first transparent resin layer and aligning the crosslinkable polymer liquid crystal, and crosslinking the crosslinkable polymer liquid crystal in a state where the crosslinkable polymer liquid crystal is aligned, to form the first polymer liquid crystal layer; (3) forming a layer of a second curable resin on the side of the first polymer liquid crystal layer, bringing a mold face having liquid crystal alignment properties into contact with the surface of the layer of the second curable resin so that the liquid crystal alignment direction to be formed by transcription of the mold face is different from the liquid crystal alignment direction of the face (a), and curing the second curable resin in a state where it is in contact with the mold face to form it into a transparent resin, and separating the mold to form the second transparent resin layer having a face (b) having liquid crystal alignment properties formed by transcription of the mold surface; and (4) forming a layer of a liquid crystalline monomer on the face (b) of the second transparent resin layer and aligning the liquid crystalline monomer, and polymerizing the liquid crystalline monomer in a state where the liquid crystalline monomer is aligned, or forming a layer of a crosslinkable polymer liquid crystal on the face (b) of the second transparent resin layer and aligning the crosslinkable polymer liquid crystal, and crosslinking the crosslinkable polymer liquid crystal in a state where the crosslinkable polymer liquid crystal is aligned, to form the second polymer liquid crystal layer.
[2] A laminate comprising a first transparent resin layer, a first polymer liquid crystal layer, a second transparent resin layer and a second polymer liquid crystal layer, wherein the first transparent resin layer has a face (a) in contact with the first polymer liquid crystal layer, and the face (a) is a face having liquid crystal alignment properties formed by transcription of a mold surface; the first polymer liquid crystal layer is a polymer liquid crystal layer formed by polymerization of a liquid crystalline monomer aligned in contact with the face (a) or by crosslinking of a crosslinkable polymer liquid crystal aligned in contact with the face (a); the second transparent resin layer is formed on the first polymer liquid crystal layer on a side on which it is not in contact with the face (a), and has a face (b) in contact with the second polymer liquid crystal layer, and the face (b) is a face having liquid crystal alignment properties formed by transcription of a mold surface; the second polymer liquid crystal layer is a polymer liquid crystal layer formed by polymerization of a liquid crystalline monomer aligned in contact with the face (b) or by crosslinking of a crosslinkable polymer liquid crystal aligned in contact with the face (b); and the alignment direction of the polymer liquid crystal in the first polymer liquid crystal layer is different from that in the second polymer liquid crystal layer.

### ADVANTAGEOUS EFFECTS OF INVENTION

According to the production process of the present invention, a pattern to align mesogen of a polymer liquid crystal can be formed on a curable resin layer with high accuracy. Further, formation of the tilt angle in a polymer liquid crystal layer can be suppressed regardless of the type of the mold and the shape of the pattern. As a result, the angle dependence of optical properties of the polymer liquid crystal layer can be reduced. In addition, since a transparent resin layer can be formed directly on the polymer liquid crystal layer, a procedure of separately preparing them and bonding them can be omitted. In addition, since a layer of an adhesive is unnecessary, the thickness of the laminate as a whole can be reduced.

Further, the laminate of the present invention is a laminate excellent in the wavelength properties, with little angle dependence of optical properties of the polymer liquid crystal layer. Further, it is a laminate excellent in the chemical and mechanical durability such as the solvent resistance and the water resistance.

The laminate of the present invention can be used as a wave plate. This wave plate can be utilized as a wide band wave plate in a wide wavelength range.

### BRIEF DESCRIPTION OF DRAWINGS

Fig. 1 is a drawing schematically illustrating an example of a process for producing a laminate of the present invention.
Fig. 2 is a drawing schematically illustrating an example of a laminate of the present invention.

### DESCRIPTION OF EMBODIMENTS

Now, embodiments of the present invention will be described with reference to drawings.

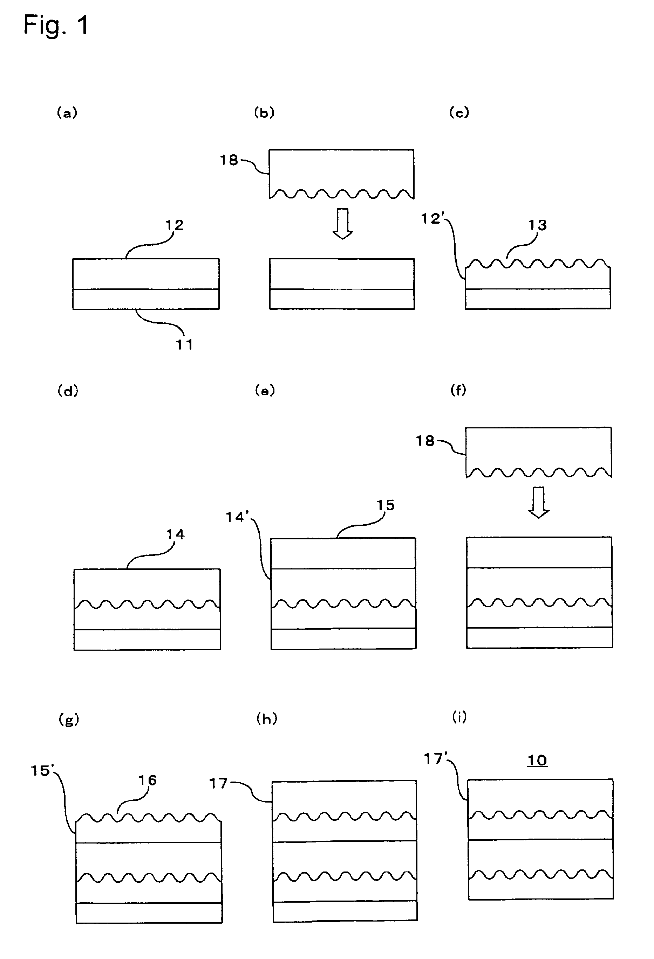

Fig. 1 is a drawing schematically illustrating an example of a process for producing a laminate of the present invention.

In the production process of the present invention, first, [1] a layer of a first curable resin in contact with a mold face having liquid crystal alignment properties is formed and the first curable resin is cured in a state where it is in contact with the mold face to form it into a transparent resin, and then the mold is separated to form the first transparent resin layer having a face (a) having liquid crystal alignment properties formed by transcription of the mold surface.

As shown in Fig. 1, a transparent resin layer 12 has a pattern 13 to impart anisotropy to a polymer liquid crystal layer 14. As described hereinafter, mesogen of a polymer liquid crystal is aligned along the pattern 13. That is, the direction of the pattern 13 corresponds to the alignment direction (first direction) of a polymer liquid crystal layer 13. As described hereinafter, the pattern 13 is an aggregate of approximately groove-form patterns, and the polymer liquid crystal is aligned along the approximately groove form.

To form the layer of the first curable resin in contact with the mold face having liquid crystal alignment properties, for example, as shown in Fig. 1(a), a layer 12 of a first curable resin is formed on one surface of a support substrate 11.

The support substrate is preferably made of a light transmitting material. In this case, it is possible to polymerize and cure the curable resin by applying light to a support formed by the light transmitting material. Such a light transmitting material may, for example, be glass, polyethylene terephthalate (PET), polycarbonate (PC), polyvinyl chloride (PVC), polymethyl methacrylate (PMMA), a cycloolefin polymer (COP) or a transparent fluororesin. Further, the thickness of the support is preferably from 50 to 200 µm. If it is thinner than 50 µm, the support substrate will be influenced by curing shrinkage which occurs when the curable resin or the like is cured, thus leading to a decrease in flatness. Further, if it is thicker than 200 µm, the haze tends to be significant, or the transmittance tends to be decreased.

To provide the layer 12 of the first curable resin on the support substrate 11, the first curable resin is applied to the support substrate 11. The coating method may, for example, be potting, spin coating, roll coating, die coating, spray coating, casting, dip coating, screen printing or transcription.

The fist curable resin is preferably a photocurable resin, preferably a composition containing a compound having an addition-polymerizable unsaturated group (for example, a functional ultraviolet curable compound, hereinafter referred to as a photopolymerizable compound) and a photopolymerization initiator. The photopolymerization initiator is a compound which induces the photopolymerizable compound to undergo radical polymerization or ionic polymerization by light.

In the photocurable resin, the proportion of the photopolymerizable compound is preferably from 90 to 99 mass%, particularly preferably from 93 to 97 mass% based on the total amount of the photopolymerizable compound and the photopolymerization initiator. When the proportion of the photopolymerizable compound is at least 90 mass%, the residue of the photopolymerization initiator can be reduced. Further, deterioration of physical properties of a transparent resin obtainable by curing the photocurable resin can be reduced or prevented. Further, when the proportion of the photopolymerizable compound is at most 99 mass%, the photopolymerizable compound can be polymerized more easily.

Further, in the photocurable resin, the proportion of the photopolymerization initiator is preferably from 1 to 10 mass%, particularly preferably from 3 to 7 mass%, based on the total amount of the photopolymerizable compound and the photopolymerization initiator. When the proportion of the photopolymerization initiator is at least 1 mass%, the photopolymerizable compound can be polymerized more easily. When the proportion of the photopolymerization initiator in the photocurable resin is at most 10 mass%, the residue of the photopolymerization initiator can be reduced, and deterioration of physical properties of a transparent resin obtainable by curing the photocurable resin can be reduced or prevented.

The photopolymerizable monomer as the photopolymerizable compound is preferably a compound having at least one polymerizable group such as a group having an addition-polymerizable unsaturated group such as an acryloyl group, an acryloyloxy group, a methacryloyl group, a methacryloyloxy group, a vinyl group or an acrylic group, or a ring-opening polymerizable group such as a cyclic ether group. Particularly preferred is a monomer having at least one acryloyloxy group (CH₂=CHCOO-) or methacryloyloxy group (CH₂=C(CH₃)COO-).

Further, the number of the polymerizable group in the photopolymerizable monomer is preferably at least 1 and at most 6, more preferably 2 or 3, particularly preferably 2. A mixture of a photopolymerizable monomer having one polymerizable group and a photopolymerizable monomer having two or more polymerizable groups is also preferred. The number of the polymerizable groups on average per molecule of the photopolymerizable monomer is preferably at least 1.2, more preferably at least 1.5, particularly preferably from 1.5 to 3. When the number of the polymerizable groups in the photopolymerizable monomer is at least 1.5, particularly at least 2 on average per molecule, the curable resin can more easily be cured to a desired hardness with sufficient strength. Further, since curing shrinkage can easily be controlled, good precision in transcription of the pattern of the mold on the transparent resin layer will be achieved.

Further, the proportion of the photopolymerizable monomer having two or more polymerizable groups in the photopolymerizable monomers contained in the photocurable resin is preferably at least 30 mass%. In this case, a transparent resin layer having favorable solvent resistance and/or heat resistance will be obtained. Further, in a case where the transparent resin layer 12 having a pattern to align the liquid crystal is coated with a solution containing a liquid crystalline monomer or a solution containing a crosslinkable polymer liquid crystal (hereinafter they will generally be referred to as a polymerizable liquid crystal material solution) as described hereinafter, dissolution of the transparent resin layer in the polymerizable liquid crystal material solution can be reduced or prevented. Further, in a case where the polymerizable liquid crystal material solution is heated to align the liquid crystal, changes (such as deformation) in the state of the transparent resin layer can be reduced or prevented.

Here, the photopolymerizable monomer is preferably acrylic acid or methacrylic acid, an acrylate or a methacrylate, an acrylamide or a methacrylamide, a vinyl ether, a vinyl ester, an allyl ether, an allyl ester or a styrene compound, particularly preferably an acrylate or a methacrylate.

In this specification, an acrylate and a methacrylate will generally be referred to as a (meth)acrylate. The same applies to (meth)acrylic acid, etc.

The (meth)acrylate may, for example, be specifically (A) a mono (meth)acrylate such as phenoxyethyl (meth)acrylate, benzyl (meth)acrylate, stearyl (meth)acrylate, lauryl (meth)acrylate, 2-ethylhexyl (meth)acrylate, ethoxyethyl (meth)acrylate, methoxyethyl (meth)acrylate, glycidyl (meth)acrylate, tetrahydrofurfuryl (meth)acrylate, allyl (meth)acrylate, 2-hydroxyethyl (meth)acrylate, 2-hydroxypropyl (meth)acrylate, N,N-diethylaminoethyl (meth)acrylate, N,N-dimethylaminoethyl (meth)acrylate, dimethylaminoethyl (meth)acrylate, methyl adamantyl (meth)acrylate, ethyl adamantyl (meth)acrylate, hydroxyadamantyl (meth)acrylate, adamantyl (meth)acrylate or isobornyl (meth)acrylate, (B) a di(meth)acrylate such as 1,3-butanediol di(meth)acrylate, 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, neopentyl glycol di(meth)acrylate, polyoxyethylene glycol di(meth)acrylate or tripropylene glycol di(meth)acrylate, (C) a tri(meth)acrylate such as trimethylolpropane tri(meth)acrylate or pentaerythritol tri(meth)acrylate, or (D) a (meth)acrylate having four or more polymerizable groups such as dipentaerythritol hexa(meth)acrylate.

The vinyl ether may, for example, be an alkyl vinyl ether (such as ethyl vinyl ether, propyl vinyl ether, isobutyl vinyl ether, 2-ethylhexyl vinyl ether or cyclohexyl vinyl ether) or a hydroxyalkyl vinyl ether (such as 4-hydroxybutyl vinyl ether).

The vinyl ester may, for example, be vinyl acetate, vinyl propionate, vinyl butyrate, vinyl isobutyrate, vinyl valerate, vinyl cyclohexanecarboxylate or vinyl benzoate.

The allyl ether may, for example, be an alkyl allyl ether (such as ethyl allyl ether, propyl allyl ether, isobutyl allyl ether or cyclohexyl allyl ether).

The allyl ester may, for example, be an alkyl allyl ester (such as ethyl allyl ester, propyl allyl ester or isobutyl allyl ester).

The monomer having a cyclic ether group may, for example, be a monomer having an oxetanyl group, a monomer having an oxiranyl group or a monomer having a spiroorthoether group.

In order that a transparent resin layer obtainable by curing the photocurable resin have high tensile strength, it is preferred to use a (meth)acrylate having two or more polymerizable groups as at least part of the photopolymerizable monomer. Such a monomer may, for example, be 1,3-butanediol di(meth)acrylate, 1,4-butanediol di(meth)acrylate, 1,6-hexanediol di(meth)acrylate, trimethylolpropane tri(meth)acrylate, pentaerythritol tri(meth)acrylate, dipentaerythritol hexa(meth)acrylate, diethylene glycol di(meth)acrylate, neopentyl glycol di(meth)acrylate, polyoxyethylene glycol di(meth)acrylate or tripropylene glycol di(meth)acrylate.

Further, the molecular weight of the photopolymerizable monomer is preferably at least 100 and at most 800, particularly preferably at least 200 and at most 600. One type of the photopolymerizable monomer may be used alone, or two or more types of the photopolymerizable monomers may be used in combination.

The photopolymerization initiator may, for example, be (A) an acetophenone photopolymerization initiator such as acetophenone, p-(tert-butyl)-1',1',1'-trichloroacetophenone, chloroacetophenone, 2',2'-diethoxyacetophenone, hydroxyacetophenone, 2,2-dimethoxy-2'-phenylacetophenone, 2-aminoacetophenone or dialkylaminoacetophenone, (B) a benzoin photopolymerization initiator such as benzyl, benzoin, benzoin methyl ether, benzoin ethyl ether, benzoin isopropyl ether, benzoin isobutyl ether, 1-hydroxycyclohexyl phenyl ketone, 2-hydroxy-2-methyl-1-phenyl-2-methylpropan-1-one, 1-(4-isopropylphenyl)-2-hydroxy-2-methylpropan-1-one or benzyl dimethyl ketal, (C) a benzophenone photopolymerization initiator such as benzophenone, benzoylbenzoic acid, methyl benzoylbenzoate, methyl-o-benzoyl benzoate, 4-phenylbenzophenone, hydroxybenzophenone, hydroxypropyl benzophenone, acrylic benzophenone or 4,4'-bis(dimethylamino)benzophenone, (D) a thioxanthone photopolymerization initiator such as thioxanthone, 2-chlorothioxanthone, 2-methylthioxanthone, diethylthioxanthone or dimethylthioxanthone, (E) a photopolymerization initiator containing a fluorine atom such as perfluoro(tert-butyl peroxide) or perfluorobenzoyl peroxide, or (F) other photopolymerization initiator such as α-acyl oxime ester, benzyl-(o-ethoxycarbonyl)-α-monooxime, acyl phosphine oxide, glyoxy ester, 3-ketocoumarin, 2-ethylanthraquinone, camphorquinone, tetramethylthiuram sulfide, azobisisobutylonitrile, benzoyl peroxide, dialkyl peroxide or tert-butyl peroxypivalate.

Further, the first curable resin may contain a surfactant. By containing a surfactant, the mold will easily be separated from the transparent resin layer 12.

The surfactant preferably contains a compound having a fluoroalkyl group which may have an etheric oxygen atom, a silicone chain or a C₄₋₂₄ alkyl group, more preferably contains a compound having a fluoroalkyl group. The fluoroalkyl group may, for example, be a perfluoroalkyl group, a polyfluoroalkyl group or a perfluoropolyether group. The silicone chain may, for example, be dimethyl silicone or methylphenyl silicone. The C₄₋₂₄ alkyl group may, for example, be a n-hexyl group, a n-heptyl group, a n-octyl group, a n-nonyl group, a n-decyl group, a n-dodecyl group, a lauryl group or an octadecyl group. The C₄₋₂₄ alkyl group may be a linear group or a branched group.

The amount of the surfactant contained in the curable resin is determined by the releasability of the mold from the transparent resin layer and the coating properties of the polymerizable liquid crystalline material solution on the surface of the transparent resin layer. In general, the releasability of the mold from the transparent resin layer will be improved as the amount of the surfactant contained in the curable resin is increased. On the other hand, the surfactant may not be completely compatible with the resin of the transparent resin layer, or the polymerizable liquid crystalline material solution applied to the surface of the transparent resin layer may be repelled. Further, the adhesion between the transparent resin layer and the polymer liquid crystal layer 13 may be decreased in some cases. In a case where the surfactant is not present in the curable resin at all or its amount is small, the coating properties of the polymerizable liquid crystalline material solution to the surface of the transparent resin layer will not be problematic so much. On the other hand, it tends to be difficult to separate the mold from the transparent resin layer 12 in some cases.

The amount of the surfactant depends on the types of the photopolymerizable monomer and the polymerizable liquid crystalline material, and is preferably from 1 to 3 mass% to the total amount of the photopolymerizable monomer and the photopolymerization initiator.

The viscosity of the curable resin at 25°C is preferably at least 1 mPa·s and at most 2,000 mPa·s, more preferably at least 5 mPa·s and at most 1,000 mPa·s. In this case, the layer 12 of the curable resin having smooth surface will be more easily formed by a means such as a spin coating method. The viscosity of the curable resin is measured by using a rotational viscometer at a temperature of 25°C. The viscosity can be adjusted by diluting the curable resin with a solvent. By properly adjusting the viscosity of the curable resin, the first transparent resin layer can be formed without using a support substrate.

Then, as shown in Fig. 1(b), a mold 18 is pressed against the layer 12 of the first curable resin so as to have a reverse pattern of a desired pattern to align the liquid crystal.

The mold 18 has a reverse pattern of a pattern to align the liquid crystal on its surface. The pattern to align the liquid crystal and the reverse pattern thereof preferably have shapes not to diffract or reflect the visible light, and they are usually preferably agglomerates of approximately groove-form patterns having a depth of at least 0.1 nm and at most 5 nm and an interval of at least 10 nm and at most 500 nm. And, the anchoring force of the pattern will be increased as the grooves are deeper and as the groove interval is shorter. The anchoring force of the pattern G is usually at least 1×10⁻⁵J/m², preferably at least 5×10⁻⁵J/m². When the anchoring force of the pattern G is at least 1×10⁻⁵J/m², a polymer liquid crystal layer 13 having high uniaxial alignment properties and a low haze can be obtained.

The pattern of the mold surface is usually a reverse pattern of a pattern to align the liquid crystal. However, when the pattern to align the liquid crystal and the reverse pattern thereof are substantially the same pattern, the pattern on the mold surface may be regarded as the pattern to align the liquid crystal. For example, in the case of the rectangular line and space, with the line width and the space width being the same, or in a case where the pattern shape is the sine curve shape, the pattern on the mold surface and the reverse pattern thereof are substantially the same. In such a case, the surface having liquid crystal alignment properties may be regarded as the mold surface. Specifically, for example, the liquid crystal alignment film surface subjected to rubbing treatment may be regarded as the mold surface.

The mold surface having the pattern may, for example, be a surface formed by applying rubbing treatment to a surface made of a liquid crystal alignment material. Specifically, a mold such as a mold consisting of a film made of a liquid crystal alignment material by itself, a mold having a thin film of a liquid crystal alignment material formed on its surface, or a mold made of a commercially available plate with a liquid crystal alignment film, may be subjected to rubbing treatment for use.

Further, the mold is preferably made of a light transmitting material. In this case, the curable resin can be polymerized or cured by irradiation with light through the mold. Such a light transmitting material may be the material exemplified as the material of the support substrate, and is preferably a resin such as PET or COP.

Further, in a case where the viscosity of the photopolymerizable composition at 25°C is from 1 to 2,000 mPa·s as described above, pattern transcription at room temperature is preferred. In such a case, the viscosity of the curable resin will be within a preferred range, and at the time of transcription of the pattern, an increase in non-uniformity of the thickness of the curable resin layer 12 will be suppressed.

Then, while a state where the mold 18 is pressed against the first curable resin layer 12 is maintained, the first curable resin is cured to form a first transparent resin. The first transparent resin layer is an optically isotropic layer. Curing of the curable resin is carried out, for example, by applying ultraviolet rays (for example, light from a high pressure mercury lamp (frequency: at least 1.5 kHz and at most 2.0 kHz, main wavelength light: 255 nm, 315 nm and 365 nm, irradiation energy at 365 nm: 1,000 mJ)) to the curable resin layer 12.

Here, the thickness of the transparent resin layer is preferably at least 3 µm and at most 30 µm, more preferably at least 10 µm and at most 20 µm. When the thickness of the transparent resin layer is at least 3 µm, the strength of the transparent resin layer will not be too small. When the thickness of the transparent resin layer is at most 30 µm, the transmittance of the transparent resin layer will not be too low, and the angle dependence of the transmittance can be reduced.

Here, the transmittance of the cured product of the curable resin having a thickness of 200 µm to ultraviolet rays having a wavelength of 360 nm is preferably at least 92%. In such a case, sufficient photopolymerization or photo-curing of the curable resin layer 12 by ultraviolet rays will be possible and in addition, yellowing of a laminate 10 to be finally obtained can be reduced.

Further, the tensile strength of the transparent resin layer is preferably at least 30 MPa. When the tensile strength is at least 30 MPa, mechanical strength of the transparent resin layer will be high, and a laminate resistant to bending will be obtained.

Further, the water contact angle of the transparent resin layer is preferably at least 50° and at most 90°, more preferably at least 60° and at most 80°. When the contact angle is at least 50°, the mold 18 can be more easily separated from a transparent resin layer 12'. Further, when the contact angle is at most 90°, when a polymerizable liquid crystalline material solution is applied to the transparent resin layer 12', repelling of the polymerizable liquid crystalline material solution can be reduced or prevented. As a result, deterioration in the adhesion between the transparent resin layer 12' and the polymer liquid crystal layer 13 can be reduced or prevented. The water contact angle of the transparent resin (the cured product of the curable resin) is measured in accordance with JIS K6768 by using a contact angle measuring apparatus.

Further, the haze of the transparent resin layer 12' is preferably at most 0.5, more preferably at most 0.1. When the haze of the transparent resin layer 12' is at most 0.5, the haze of the laminate 10 can be reduced.

Further, the retardation of the transparent resin layer 12' is preferably at most 3 nm, more preferably at most 1 nm. When the retardation of the transparent resin layer 12' is at most 3 nm, the retardation of the laminate 10 can be more easily controlled, and the ellipticity of the laminate 10 can be improved.

Then, the mold 18 is separated from the first transparent layer 12' to obtain a first transparent resin layer 12' having a face (a) having liquid crystal alignment properties on the support substrate 11 as shown in Fig. 1(c). The face (a) has a pattern G to align the polymer liquid crystal in a first direction. As described above, by the pattern G, the first direction can be determined, that is, the alignment of the polymer liquid crystal can be controlled.

Formation of the transparent resin layer 12' having a face (a) was described above with reference to Fig. 1, but the method of forming the transparent resin layer 12' is not limited thereto. For example, the transparent resin layer 12' may be formed as follows. A support substrate 11 and a mold 18 having a reverse pattern of the pattern G to align the liquid crystal, are put close to each other or are brought into contact with each other so that the reverse pattern of the mold 18 is on the side of the support substrate 11. Then, the curable resin composition is filled between the support substrate 11 and the mold 18, and the curable resin is irradiated with light in a state where the support substrate 11 and the mold 18 are put close to each other or are brought into contact with each other to cure the curable resin to obtain a cured product. Then, the mold 18 is separated to form the transparent resin layer 12'.

Further, the support substrate is not essential. For example, the curable resin may be formed into a layer form (e.g. quadrate), and against the surface, a mold having a reverse pattern of a pattern to align the liquid crystal on its surface is pressed, and the curable resin is cured while the state is maintained, and then the mold is separated. Otherwise, a curable resin may be supplied to a mold having a reverse pattern of a face having liquid crystal alignment properties, then the curable resin is cured, and then the mold is separated.

In the present invention, then, [2] a layer of a liquid crystalline monomer is formed on the face (a) of the first transparent resin layer and the liquid crystalline monomer is aligned, and the liquid crystalline monomer is polymerized in a state where the liquid crystalline monomer is aligned, or a layer of a crosslinkable polymer liquid crystal is formed on the face (a) of the first transparent resin layer and the crosslinkable polymer liquid crystal is aligned, and the crosslinkable polymer liquid crystal is crosslinked in a state where the crosslinkable polymer liquid crystal is aligned, to form the first polymer liquid crystal layer.

First, as shown in Fig. 1(d), a polymerizable liquid crystalline material or its solution is applied to the layer 12' of the first transparent resin to form a layer 14 of the polymerizable liquid crystalline material.

Here, the wavelength dispersion of the retardation of the polymerizable liquid crystalline material is properly set depending on the application of the laminate of the present invention. For example, in a case where the light having a wavelength of 450 nm and the light having a wavelength of 550 nm are to be similarly modulated by using the laminate of the present invention, the value (Re₄₅₀/450) obtained by dividing the retardation (Re₄₅₀) at a wavelength of 450 nm by the wavelength, and the value (Re₅₅₀/550) obtained by dividing the retardation (Re₅₅₀) at a wavelength of 550 nm by the wavelength, are preferably substantially equal. In such a case, the laminate functions as a wide band wave plate. For example, when (Re₄₅₀/450) and (Re₅₅₀/550) are both 1/4, the laminate has good ellipticity and functions as a quarter-wave plate.

Further, when the birefringence Δn of the polymerizable liquid crystalline material is high, the thickness of the polymer liquid crystal layer 13 can be reduced, and the wavelength dispersion of the retardation tends to be significant. Accordingly, a polymerizable liquid crystalline material having a birefringence Δn as high as possible within a preferred range of the wavelength dispersion of the retardation, is preferred.

Here, the transmittance of the polymer liquid crystal having a thickness of 200 µm, to ultraviolet rays having a wavelength of 360 nm, is preferably at least 92%. When the transmittance is at least 92%, sufficient photopolymerization or photo-curing of the polymerizable liquid crystalline material by ultraviolet rays is possible, and yellowing of the laminate 10 to be finally obtained can be reduced.

This polymerizable liquid crystalline material is a material having a polymerizable group and a mesogen group, and it may, for example, be a liquid crystalline monomer, a liquid crystalline oligomer or a liquid crystalline polymer, each having a polymerizable group. In the present invention, so long as the above-described properties are satisfied, the structure of the mesogen of the polymerizable liquid crystalline material, etc., are not particularly limited. When a liquid crystalline polymer (crosslinkable polymer liquid crystal) having a plurality of polymerizable groups is used, crystallization of a crosslinked product to be obtained can be suppressed, and a laminate having high transparency can be prepared.

The polymerizable group is an acryloyl group, an acryloyloxy group, a methacryloyl group, a methacryloyloxy group, a vinyl group, an allyl group or a cyclic ether group, capable of being polymerized and cured by light, and is more preferably an acryloyloxy group or a methacryloyloxy group.

The mesogen group contributes to anisotropy of the polymerizable liquid crystalline material. The mesogen group is preferably a cyclic group containing at least one of a ring of an alicyclic hydrocarbon, a ring of an aromatic hydrocarbon and a heterocyclic ring. Further, the rings contained in the mesogen group may be directly bonded to each other, or may be indirectly bonded via a connecting group.

The cyclic groups contained in the mesogen group may be any of combinations of the same type or different types. The number of cyclic groups is particularly preferably at least 2 and at most 4, especially preferably 2 or 3. When the number of cyclic groups is at least 2, liquid crystallinity will develop. When the number of cyclic groups is at most 4, the melting point of the liquid crystalline monomer tends to be low. Accordingly, precipitation of crystals in a step of polymerizing and curing the polymerizable liquid crystalline material will be suppressed, whereby the haze of the polymer liquid crystal layer 13 can be made low.

As the polymerizable liquid crystalline material, the following materials are preferred.
(1) A liquid crystalline monomer having a polymerizable group and a mesogen group.

The liquid crystalline monomer is a compound having liquid crystallinity and being capable of being polymerized while maintaining the alignment state, and the alignment state is fixed by polymerization.
(2) A crosslinkable polymer liquid crystal having crosslinkable groups introduced to a polymer having mesogen groups.

Here, the polymer having mesogen groups is preferably a polymer obtainable by polymerizing a monomer having a polymerizable group and a mesogen group. Further, the crosslinkable group may be the same group (e.g. an acryloyloxy group capable of being polymerized by light) as the above polymerizable group, and the preferred embodiment thereof is also the same as the polymerizable group. The crosslinkable polymer liquid crystal is a polymer capable of being aligned in a solution state or in a molten state, and it can undergo crosslinking while maintaining the alignment state, and the alignment state is fixed by crosslinking.

As the polymerizable liquid crystalline material, more specifically, the following materials are preferred.
(1-1) A liquid crystalline monomer having at least two groups of at least one type of a polymerizable group selected from an acryloyloxy group and a methacryloyloxy group, and a mesogen group.
(2-1) A crosslinkable polymer liquid crystal having at least one type of a crosslinkable group selected from an acryloyloxy group and a methacryloyloxy group introduced into a polymer of a compound having one addition-polymerizable unsaturated group and a mesogen group.

The liquid crystalline monomer (1) preferably has a plurality of polymerizable groups. That is, it is preferably a crosslinkable liquid crystalline monomer. In such a case, the polymerizable liquid crystalline material can be more easily cured to a desired hardness.

When the polymer liquid crystal (2) is crosslinked, crystallization can be suppressed as compared with the case of the crosslinkable liquid crystalline monomer, whereby the film having high transparency can be easily prepared.

As the liquid crystalline monomer having a crosslinkable group and at least two cyclic groups, the following liquid crystalline monomer (1 a) may be mentioned.

CH₂=CR¹-COO-(CH₂)ₘ₁-(O)ₙ₁-X-M-Y-(O)ₙ₂-(CH₂)ₘ₂-0CO-CR=CH₂ (1a)

In the formula, symbols have the following meanings.

R¹, R²: Independently a hydrogen atom or a methyl group.

m1, m2: Independently an integer of from 0 to 12.

n1: 0 when m1 is 0, and 1 when m1 is an integer of from 1 to 12.

n2: 0 when m2 is 0, and 1 when m2 is an integer of from 1 to 12.

X, Y: Independently a single bond, -COO-, -OCO- or -CO-.

M: A bivalent mesogen group having at least 2 cyclic groups bonded directly or via a connecting group.

Each of m1 and m2 which are independent of each other, is preferably an integer of from 1 to 12, particularly preferably an integer of from 2 to 6.

As specific examples of the liquid crystalline monomer (1 a), for example, the following compounds may be mentioned.

CH₂=CR¹-COO-(CH₂)ₛO-Ph-COO-Ph-O(CH₂)ₜ-OCO-CR²=CH₂,

CH₂=CR¹-COO-(CH₂)ₛO-Ph-Z¹-Ph-Z²-Ph-O(CH₂)ₜ-OCO-CR²=CH₂,

CH₂=CR¹-COO-(CH₂)ₛO-Ph-Ph-O(CH₂)ₜ-OCO-CR²=CH₂,

CH₂=CR¹-COO-(CH₂)ₛO-Ph-C=C-Ph-O(CH₂)ₜ-OCO-CR²=CH₂,

CH₂=CR¹-COO-(CH₂)ₛO-COO-Ph-Z¹-Ph-Z²-Ph-OCO-O(CH₂)ₜ-OCO-CR²=CH₂,

CH₂=CR¹-COO-(CH₂)ₛO-CO-Ph-Z¹-Ph-Z²-Ph-CO-O(CH₂)ₜ-OCO-CR²=CH₂.

In the formulae, symbols have the following meanings.

R¹, R²: Independently a hydrogen atom or a methyl group.

s, t: Independently an integer of from 1 to 12.

Z¹, Z²: Independently a single bond, -COO-, -OCO- or -CO-.

Ph: A 1,4-phenylene group (which may be substituted by a methyl group or a methoxy group).

The compound having one addition-polymerizable unsaturated group and a mesogen group may be the following monomer (2a). The monomer (2a) may be polymerized alone, or may be copolymerized with the following monomer (2b).

CH₂=CR¹-COO-(CH₂)ₘ₁-(O)ₙ₁-X-M¹-Q (2a)

CH₂=CR¹-COO-(CH₂)ₘ₁-(O)ₙ₁-X-M² (2b)

In the formulae, the symbols R¹, m1, n1 and X have the same meanings as in the formula (1a). M¹ is a bivalent mesogen group, M² is a monovalent mesogen group and Q is a reactive functional group or an organic group having a reactive functional group. The monovalent mesogen group as M² may have, at its terminal, a terminal group known as a terminal group of a liquid crystal compound, such as an alkyl group, an alkoxy group, a halogen atom or a cyano group. Q may, for example, be a reactive functional group such as a hydroxy group, an amino group, an epoxy group, a carboxy group or an isocyanate group or an organic group having a reactive functional group such as a hydroxyalkyl group, an aminoalkyl group, a glycidyl group or an isocyanate alkyl group.

After a polymer of the monomer (2a) or a copolymer of the monomer (2a) and the monomer (2b) is prepared, with the reactive functional group of Q in such a polymer, a compound having a group reactive with the reactive functional group and a (meth)acryloyloxy group or a reactive (meth)acrylic acid derivative is reacted to convert some or all of Q in the polymer to groups having a (meth)acryloyloxy group to form a crosslinkable polymer liquid crystal. For example, in a case where Q is a hydroxy group, a (meth)acrylate having an isocyanate group or a reactive (meth)acrylic acid derivative is reacted to convert hydroxy groups to (meth)acryloyl groups or groups having a (meth)acryloyl group. The reactive (meth)acrylic acid derivative is preferably (meth)acrylic acid chloride.

Further, two or more types of polymerizable liquid crystalline materials may be used in combination. In a case where two or more are used in combination, the combination and the blend ratio are preferably set properly depending on the application and properties required.

The polymerizable liquid crystalline material may contain a polymerization initiator and a surfactant. As the polymerization initiator, the same material as the photopolymerization initiator in the curable resin may be used. The surfactant contributes to alignment of the polymerizable liquid crystalline material along the face of the transparent resin layer 12' as described hereinafter. As the surfactant, the same material as the surfactant in the curable resin may be used. The amount of the surfactant contained in the polymerizable liquid crystalline material is considered to be within a range where the alignment of the polymerizable liquid crystalline material can be properly controlled.

As a method of supplying the polymerizable liquid crystalline material to the transparent resin layer 12', potting, spin coating, roll coating, die coating, spray coating, casting, dip coating, screen printing or a transcription method may, for example, be mentioned. In a case where a solution of the polymerizable liquid crystalline material is used, a layer of the solution of the polymerizable liquid crystalline material is formed by such a method, and then the solvent is removed e.g. by drying to obtain a layer of the polymerizable liquid crystalline material containing no solvent.

Then, the mesogen of the polymerizable liquid crystalline material in the polymerizable liquid crystalline material layer is aligned. For example, by heating the polymerizable liquid crystalline material and maintaining it within a liquid crystal temperature, the mesogen of the liquid crystalline monomer or the polymer liquid crystal having crosslinkable groups is aligned in a first direction. Here, by the surfactant being present between the air and the polymerizable liquid crystalline material, the mesogen of the liquid crystalline monomer or the polymer liquid crystal having crosslinkable groups is easily aligned horizontally to the face of the transparent resin layer 12'.

Then, the polymerizable liquid crystalline material is polymerized and cured or crosslinked while a state where the mesogen of the polymerizable liquid crystalline material is aligned is maintained, to obtain a polymer liquid crystal layer 14'. This can be attained, for example, by applying ultraviolet rays to the polymerizable liquid crystalline material layer 14. In order to improve the reactivity of the polymerizable liquid crystalline material, it is preferred to apply light to the polymerizable liquid crystalline material in a nitrogen atmosphere. The reactivity of the polymerizable groups is preferably at least 70%. When the reactivity of the polymerizable groups is high, the solvent resistance and the heat resistance of the polymer liquid crystal layer 14 can be improved. That is, when a curable resin is further applied to the polymer liquid crystal layer 14, dissolution of the polymer liquid crystal layer can be reduced or prevented. Further, the polymer liquid crystal will have good heat resistance.

Then, [3] a layer of a second curable resin is formed on the side of the first polymer liquid crystal layer, a mold having a reverse pattern of the pattern to align the liquid crystal on its surface is brought into contact with the surface of the layer of the second curable resin so that the liquid crystal alignment direction to be formed by transcription of the mold is different from the liquid crystal alignment direction of the face (a), and the second curable resin is cured in a state where it is in contact with the mold face to form it into a transparent resin, and then the mold is separated to form the second transparent resin layer having a face (b) having liquid crystal alignment properties formed by transcription of the mold surface.

As shown in Fig. 1 (e), a second curable resin is applied to the surface of a first polymer liquid crystal layer 14' to form a layer 15 of the second curable resin. The layer of the second curable resin can be formed by using the same material as the first curable resin by the same means. However, the transparent resin layer obtained by curing the second curable resin is disposed between the first polymer liquid crystal layer and the second polymer liquid crystal layer as described hereinafter. Thus, even if the thickness is smaller than the thickness of the first transparent resin layer, the strength will not be impaired, and the thickness is preferably adjusted to be at least 1 µm and at most 25 µm (preferably at least 3 µm and at most 10 µm).

When the first polymerizable liquid crystalline material contains a surfactant and a treatment such as heating is carried out to control the alignment direction as mentioned above, the surfactant may be unevenly present on the surface of the first polymer liquid crystal layer 14' in some cases. In such a case, by washing the surface of the first polymer liquid crystal layer 14' by a solvent such as a fluorinated solvent, the coating properties and the adhesion of the second curable resin to the surface of the first polymer liquid crystal layer 14' will be improved.

Then, as shown in Fig. 1(f), a mold 18 having a pattern reverse of the desired pattern is pressed against the layer 15 of the second curable resin to form a second pattern 16 to align the polymer liquid crystal in a second direction, on the layer 15 of the second curable resin. Here, the angle at which the mold 18 is pressed against the layer 15 of the second curable resin is different from the angle at which the mold 18 is pressed against the layer 12 of the first curable resin.

Further, in the production process of the present invention, the angle formed by the first direction and the second direction is usually more than 0° and less than 90°, preferably at least 30° and less than 90°, particularly preferably 60° ± (10)° (i.e. at least 50° and at most 70°).

Then, while a state where the mold 18 is pressed against the second curable resin layer 15 is maintained, ultraviolet rays are applied to the second curable resin layer 15 to cure the second curable resin thereby to obtain an optically isotropic second transparent resin layer 15'.

Then, the mold 18 is separated from the second transparent resin layer 15' to obtain a second transparent resin layer 15' having a second pattern 16 to align the polymer liquid crystal in a second direction, on the first polymer liquid crystal layer 14', as shown in Fig. 1 (g). That is, the second transparent resin layer 15' has a face (b) having liquid crystal alignment properties.

Here, the face (a) has an axis in the first direction and the face (b) has an axis in the second direction, and the first direction and the second direction are different from each other, and the angle formed by them is preferably at least 30° and less than 90°.

Then, [4] a layer of a liquid crystalline monomer is formed on the face (b) of the second transparent resin layer and the liquid crystalline monomer is aligned, and the liquid crystalline monomer is polymerized in a state where the liquid crystalline monomer is aligned, or a layer of a crosslinkable polymer liquid crystal is formed on the face (b) of the second transparent resin layer and the crosslinkable polymer liquid crystal is aligned, and the crosslinkable polymer liquid crystal is crosslinked in a state where the crosslinkable polymer liquid crystal is aligned, to form the second polymer liquid crystal layer.

As shown in Fig. 1(h), a solution of the second polymerizable liquid crystalline material is applied to the second transparent resin layer 15' to form a layer 17 of the polymerizable liquid crystalline material on the second transparent resin layer 15'. At this time, the mesogen of the polymerizable liquid crystalline material is aligned in the second direction. Then, while a state where the mesogen of the polymerizable liquid crystalline material is aligned in the second direction is maintained, the polymerizable liquid crystalline material is polymerized and cured or crosslinked to obtain a second polymer liquid crystal layer 17'.

Here, as the second polymerizable liquid crystalline material, the same material as the first polymerizable liquid crystalline material may be used, and preferred embodiments thereof are also the same. The first polymerizable liquid crystalline material and the second polymerizable liquid crystalline material may be the same material or may be different materials, and they are preferably the same, whereby the temperature dependence of the retardation can be suppressed.

Here, alignment of mesogen may be accelerated by a means such as heating in the same manner as for the first polymerizable liquid crystalline material.

Then, as the case requires, as shown in Fig. 1(i), the support substrate 11 may be separated from the first transparent resin layer 12'. If there is no support substrate 11, a laminate as a self-supporting film even though it is more easily flexed can be obtained.

Further, in the production process of the present invention, a cycle of forming a transparent resin layer having a surface having a pattern to align the mesogen of the polymer liquid crystal in a certain direction in the same manner as above on the side of the second polymer liquid crystal layer of the laminate obtained as mentioned above, and then forming a polymer liquid crystal layer on the transparent resin layer, may be repeated. In such a case, the certain direction is a direction different from the direction to align the mesogen of the polymer liquid crystal layer formed below the subjacent transparent resin layer. In such a manner, it is possible to repeatedly form a combination of a transparent resin layer and a polymer liquid crystal layer while adjusting the alignment directions of the mesogens of the polymer liquid crystals in different directions, depending upon the optical properties required for the laminate.

That is, a laminate having N layers of transparent resin layers and N layers of polymer liquid crystal layers (wherein N is an integer of at least 3) wherein the liquid crystal alignment direction of one polymer liquid crystal layer is different from the liquid crystal alignment direction of another polymer liquid crystal layer adjacent to the above polymer liquid crystal layer via a transparent resin layer, can be produced by the above process for producing a laminate having two polymer liquid crystal layers, which further carries out a cycle of formation of a transparent resin layer in accordance with the above (3) and formation of a polymer liquid crystal layer in accordance with the above (4) on the side of the second polymer liquid crystal layer at least once. In the laminate having more than two polymer liquid crystal layers, the total number N of the polymer liquid crystal layers is preferably at most 5.

Further, in the case of a laminate having three or more polymer liquid crystal layers, the angle formed by the liquid crystal alignment direction of one polymer liquid crystal layer and the liquid crystal alignment direction of another polymer liquid crystal layer adjacent to the above polymer liquid crystal layer via a transparent resin layer, is more than 0° and less than 90°, preferably at most 70°. The maximum angle among angles formed by the liquid crystal alignment directions of optional two polymer liquid crystal layers is preferably less than 90°, more preferably at least 30° and less than 90°, particularly preferably 60° ± (10)° (i.e. at least 50° and at most 70°).

As described above, a liquid crystal film 10 as a laminate comprising a first transparent resin layer 12', a first polymer liquid crystal layer 14', a second transparent resin layer 15' and a second polymer liquid crystal layer 17' can be produced as shown in Fig. 1.

According to the production process of the present invention, a pattern to align mesogen of a polymer liquid crystal can be formed on a curable resin layer with high accuracy. Further, formation of the tilt angle in a polymer liquid crystal layer can be suppressed regardless of the type of the mold and the shape of the pattern. As a result, the angle dependence of optical properties of the polymer liquid crystal layer can be reduced. In addition, since a transparent resin layer can be formed directly on the polymer liquid crystal layer, a procedure of separately preparing them and bonding them can be omitted. In addition, since a layer of an adhesive is unnecessary, the thickness of the laminate as a whole can be reduced.

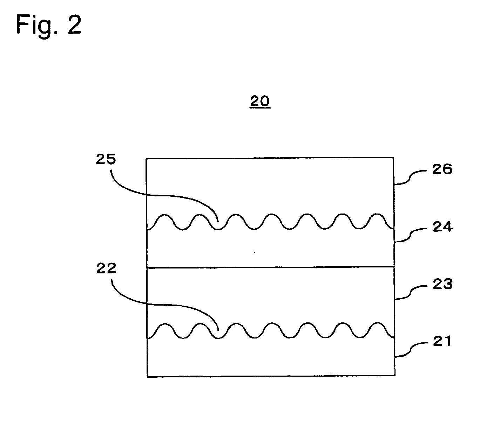

Fig. 2 is a drawing schematically illustrating an example of a laminate of the present invention. A laminate (liquid crystal film 20) shown in Fig. 2 comprises a first transparent resin layer 21, a first polymer liquid crystal layer 23 formed on the transparent resin layer 21, a second transparent resin layer 24 formed on the polymer liquid crystal layer 23, and a second polymer liquid crystal layer 26 formed on the transparent resin layer 24.

In the liquid crystal film 20, the first transparent resin layer 21 has a face (face (a)) having a first pattern 22 to align the mesogen of the polymer liquid crystal in a first direction on the first polymer liquid crystal layer 23 side. Further, the second transparent resin layer 24 has a face (face (b)) having a second pattern 25 to align the mesogen of the polymer liquid crystal in a second direction different from the first direction on the second polymer liquid crystal layer 26 side.

The laminate 10 functions as a wave plate (e.g. a half-wave plate or a quarter-wave plate), and is capable of converting the light polarization state (for example, conversion of linearly polarized light (circularly polarized light) to circularly polarized light (linearly polarized light)).

The first polymer liquid crystal layer 23 and the second polymer liquid crystal layer 26 have optical anisotropy with axes in the first direction and the second direction, respectively, and they function as wave plates respectively. By laminating a plurality of wave plates, the band of the wave plate can be widened. As a result, it is possible to convert a linearly polarized light (circularly polarized light) to circularly polarized light (linearly polarized light) in a wide wavelength range of from about 400 nm (blue) to about 800 nm (red). As one example, a wide band quarter-wave plate can be obtained by (a) combining a quarter-wavelength (λ/4) uniaxially aligned substrate 11 and a half-wavelength (λ/2) polymer liquid crystal layer 13 or (b) combining a λ/2 uniaxially aligned substrate 11 and a λ/4 polymer liquid crystal layer 13. Here, at this time, the direction formed by the first direction and the second direction is preferably 60° ± 10° (at least 50° and at most 70°) for example, more preferably 60° ± 5° (at least 55° and at most 65°).

The transparent resin layer 12 and the polymer liquid crystal layer 14 of the laminate 10 are formed by polymerization and have solvent resistance and water resistance. Accordingly, the laminate 10 as a whole has solvent resistance and water resistance. Further, by adjusting the angle formed by the second transparent resin layer 24 and the optical axis of the first transparent resin layer 21 to be different directions, the wavelength properties of the laminate 10 as a whole can be improved.

The laminate (liquid crystal film 20) can be used as a wave plate. Further, this wave plate can be utilized also as a wide band wave plate capable of conversion in a wide wavelength range of from about 400 nm (blue) to about 800 nm (red).

Further, the laminate of the present invention may be a laminate comprising totally N layers of transparent resin layers and N layers of polymer liquid crystal layers (wherein N is an integer of at least 3) having at least one combination of the same transparent resin layer as the above transparent resin layer and the same polymer liquid crystal layer as the above polymer liquid crystal layer on the second polymer liquid crystal layer side, wherein the liquid crystal alignment direction of one polymer liquid crystal layer is different from the liquid crystal alignment direction of another polymer liquid crystal layer adjacent to the above polymer liquid crystal layer via a transparent resin layer. In the laminate having more than two polymer liquid crystal layers, the total number N of the polymer liquid crystal layers is preferably at most 5.

Further, in the case of a laminate having at least three polymer liquid crystal layers, the angle formed by the liquid crystal alignment direction of one polymer liquid crystal layer and the liquid crystal alignment direction of another polymer liquid crystal layer adjacent to the above polymer liquid crystal layer via a transparent resin layer is more than 0° and less than 90°, preferably at most 70°. The maximum angle among angles formed by the liquid crystal alignment directions of optional two polymer liquid crystal layers is preferably less than 90°, more preferably at least 30° and less than 90°, particularly preferably 60° ± (10)° (i.e. at least 50° and at most 70°).

The laminate having N layers of transparent resin layers and N layers of polymer liquid crystal layers can be utilized as a wave plate, particularly a wide band wave plate as described above.

### EXAMPLES

Now, the present invention will be described in detail with reference to Examples.

### SYNTHESIS EXAMPLE 1: Synthesis of polymer liquid crystal (A-1)

Polymer liquid crystal (A-1) was synthesized in accordance with the following chemical reaction formula (1).

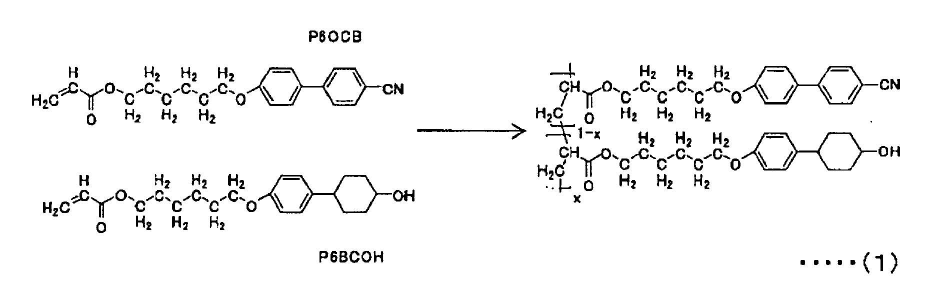

In the chemical reaction formula (1), x is the proportion (molar ratio) of the number of units of the following liquid crystalline monomer (P6BCOH) to the total number of units of the following liquid crystalline monomer (P6OCB) and units of the liquid crystalline monomer (P6BCOH).

Into a 10 mL screw-top test tube, 2.8 g of a liquid crystalline monomer (P6OCB), 1.2 g of a liquid crystalline monomer (P6BCOH), 40 mg of a polymerization initiator (manufactured by Wako Pure Chemical Industries, Ltd., trade name "V40"), 120 mg of 1-dodecanethiol (chain transfer agent) and 4.8 g of N,N-dimethylformamide were put, and the air in the screw-top test tube was replaced with nitrogen, and the screw-top test tube was sealed. The screw-top test tube was shaken in a 80°C incubator for 18 hours to polymerize the liquid crystalline monomers.

The formed product was washed in methanol to remove the unreacted liquid crystalline monomers, the formed product was dissolved in tetrahydrofuran, and the obtained solution was dropwise added to methanol to purify the formed product by reprecipitation. Then, the formed product was dried in a vacuum drier at 40°C for 2 hours to obtain 3.68 g (yield: 92%) of white polymer liquid crystal (A-1).

### SYNTHESIS EXAMPLE 2

Polymer liquid crystal (B-1) was obtained in the same manner as in Synthesis

Example 1 except that the compositional ratio of the liquid crystalline monomers was changed as shown in Table 1.

The number average molecular weight (Mn), the melting point (Tm), the glass transition point (Tg), the clearing point (Tc) and the polymer purity of polymer liquid crystal (A-1) obtained in Synthesis Example 1 and polymer liquid crystal (B-1) obtained in Synthesis Example 2 are shown in Table 1.

**TABLE 1**

| | | Synthesis Example 1 | Synthesis Example 2 |
|---|---|---|---|
| | | Polymer liquid crystal (A-1) | Polymer liquid crystal (B-1) |
| Monomer compositional ratio (molar ratio) | P6OCB | 0.92 | 0.5 |
| | P6BCOH | 0.08 | 0.5 |
| Amount of chain transfer agent per 100 parts by mass of total amount of liquid crystalline monomers | | 3 parts by mass | 3 parts by mass |
| Amount of polymerization initiator per 100 parts by mass of total amount of liquid crystalline monomers | | 1 part by mass | 1 part by mass |
| Total amount of liquid crystalline monomers/amount of solvent (mass ratio) | | 0.8 | 0.8 |
| Mn | | 10,500 | 5,900 |
| Tm (°C) | | Nil | 66 |
| Tg (°C) | | 28 | 21 |
| Tc (°C) | | 120 | Nil |
| Polymer purity (%) | | 99< | 99< |

### SYNTHESIS EXAMPLE 3: Example for synthesis of crosslinkable polymer liquid crystal (A-2)

Using polymer liquid crystal (A-1) obtained in Synthesis Example 1, crosslinkable polymer liquid crystal (A-2) was obtained in accordance with the following chemical reaction formula (2).

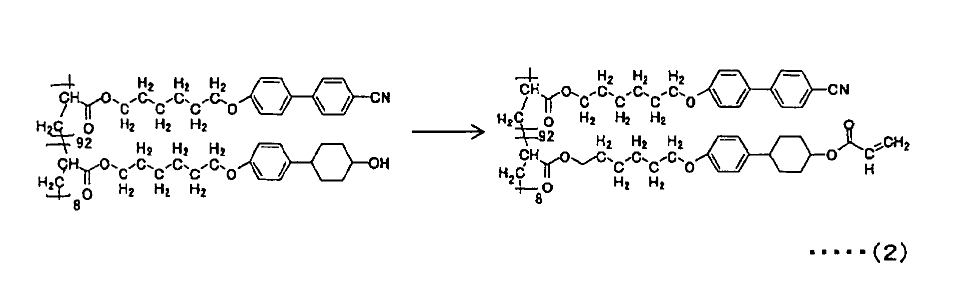

Into a 200 mL three-necked flask, 3.5 g of polymer liquid crystal (A-1), 0.295 (2.81 mmol) of acrylic acid chloride, 0.315 g (3.12 mmol) of triethylamine, 0.130 g (1.07 mmol) of 1,4-dimethylaminopyridine and 100 mL of tetrahydrofuran were put, and the content was stirred in a nitrogen atmosphere at room temperature for 2 hours.

The obtained reaction solution was dropwise added to hexane and stirred for 10 minutes, and the obtained polymer was washed. Further, the polymer was dissolved in tetrahydrofuran, and the obtained solution was dropwise added to methanol to purify the polymer by reprecipitation. Then, the polymer was dried in a vacuum drier at room temperature for 2 hours to obtain 3.25 g (yield: 93%) of white crosslinkable polymer liquid crystal.

### SYNTHESIS EXAMPLE 4: Example for synthesis of crosslinkable polymer liquid crystal(B-2)

Using polymer liquid crystal (B-1) obtained in Synthesis Example 2, crosslinkable polymer liquid crystal (B-2) was obtained in accordance with the following chemical reaction formula (3).

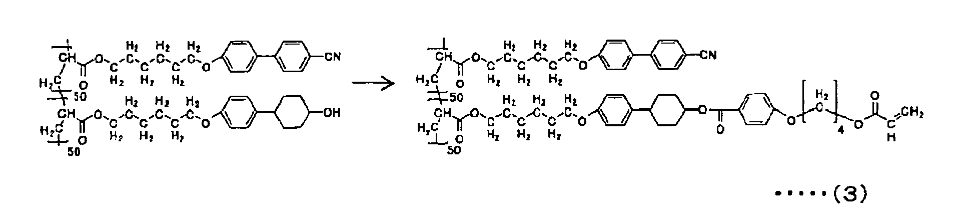

Into a 200 mL three-necked flask, 3.5 g of polymer liquid crystal (B-1), 3.35 g (12.9 mmol) of 4-(4-acryloyloxy-butyloxy)benzoic acid (manufactured by SYNTON, ST1680), 2.58 g (21.4 mmol) of dicyclohexylcarbodiimide, 0.466 g (3.82 mmol) of 1,4-dimethylaminopyridine and 200 mL of dichloromethane were put, and the content was stirred at room temperature for one day.

The obtained reaction solution was subjected to filtration, the filtrate was dropped in hexane and stirred for 10 minutes, and then the polymer was taken out. Further, the polymer was dissolved in tetrahydrofuran, and the obtained solution was dropwise added to methanol to purify the polymer by reprecipitation. Then, the polymer was dried in a vacuum drier at room temperature for 2 hours to obtain 3.2 g (yield: 90%) of white crosslinkable polymer liquid crystal (B-2).

The number average molecular weight (Mn), the melting point (Tm), the glass transition point (Tg), the clearing point (Tc) and the polymer purity of crosslinkable polymer liquid crystal (A-2) obtained in Synthesis Example 3 and crosslinkable polymer liquid crystal (B-2) obtained in Synthesis Example 4 are shown in Table 2.

**TABLE 2**

| | Synthesis Example 3 | Synthesis Example 4 |
|---|---|---|
| Crosslinkable polymer liquid crystal | A-2 | B-2 |
| Mn | 12,000 | 10,000 |
| Tm (°C) | Nil | Nil |
| Tg (°C) | 27 | 20 |
| Tc (°C) | 107 | 134 |
| Polymer purity (%) | 99< | 99< |

### EXAMPLE FOR PREPARATION OF POLYMER LIQUID CRYSTAL SOLUTION

In the following Preparation Examples, IRGACURE-127 (trade name) manufactured by Chiba Specialty Chemicals was used as a polymerization initiator, and S420 (product number) manufactured by AGC Seimi Chemical Co., Ltd. was used as a surfactant.

### PREPARATION EXAMPLE 1-1

100 parts by mass of crosslinkable polymer liquid crystal (A-2) and 1 part by mass of the polymerization initiator were mixed with 640 parts by mass of cyclohexanone, and the obtained mixture was subjected to filtration through a polytetrafluoroethylene (PTFE) filter having a pore size of 0.5 µm to obtain crosslinkable polymer liquid crystal solution (a-21).

### PREPARATION EXAMPLE 1-2

Crosslinkable polymer liquid crystal solution (a-22) was obtained in the same manner as in Preparation Example 1-1 except that the proportion of cyclohexanone was 330 parts by mass in accordance with the proportion as identified in Table 3.

In Table 3, the amounts of cyclohexanone, the polymerization initiator and the surfactant are amounts per 100 parts by mass of the crosslinkable polymer liquid crystal.

### PREPARATION EXAMPLE 2-1

In the same manner, in accordance with the proportion as identified in Table 3, crosslinkable polymer liquid crystal solution (b-21) was prepared. Here, to crosslinkable polymer liquid crystal solution (b-21), the surfactant in an amount of 0.2 part by mass per 100 parts by mass of crosslinkable polymer liquid crystal (B-2) was also added. The surfactant is used to control the horizontal alignment of mesogen of the crosslinkable polymer liquid crystal.

### PREPARATION EXAMPLE 2-2

Crosslinkable polymer liquid crystal solution (b-22) was obtained in the same manner as in Preparation Example 2-1 except that the proportion of cyclohexanone was changed to 325 parts by mass in accordance with the proportion as identified in Table 3.

### PREPARATION EXAMPLE 3-1

Crosslinkable liquid crystalline monomer solution(C-1) was prepared in accordance with the proportion as identified in Table 4. As the crosslinkable liquid crystalline monomer, LC242 manufactured by BASF was used.

### PREPARATION EXAMPLE 3-2

Crosslinkable liquid crystalline monomer solution(C-2) was obtained in the same manner as in Preparation Example 3-1 except that the proportion of toluene was 280 parts by mass in accordance with the proportion as identified in Table 4.

In Table 4, the amounts of toluene, the polymerization initiator and the surfactant are amounts per 100 parts by mass of the liquid crystalline monomer.

**TABLE 3**

| | Preparation Example 1-1 | Preparation Example 1-2 | Preparation Example 2-1 | Preparation Example 2-2 |
|---|---|---|---|---|
| Crosslinkable polymer liquid crystal solution | a-21 | a-22 | b-21 | b-22 |
| Crosslinkable polymer liquid crystal | A-2 | A-2 | B-2 | B-2 |
| Cyclohexanone (parts by mass) | 640 | 330 | 635 | 325 |
| Polymerization initiator (part by mass) | 1 | 1 | 1 | 1 |
| Surfactant (part by mass) | 0 | 0 | 0.2 | 0.2 |

**TABLE 4**

| | Preparation Example 3-1 | Preparation Example 3-2 |
|---|---|---|
| Polymerizable liquid crystalline monomer solution | c-1 | c-2 |
| Polymerizable liquid crystalline monomer | LC242 | LC242 |
| Toluene (parts by mass) | 490 | 280 |
| Polymerization initiator (parts by mass) | 5 | 5 |
| Surfactant (part by mass) | 0.2 | 0.2 |

### [PREPARATION OF PHOTOCURABLE RESIN]

### PREPARATION EXAMPLE 3

Into a 300 mL four-necked flask equipped with a stirrer and a condenser tube, 65 g of bisphenol A epoxy acrylate (manufactured by Shin-Nakamura Chemical Company, Limited, NK Oligo EA-1020), 35 g of hexane diacrylate (manufactured by Shin-Nakamura Chemical Company, Limited, NK ester A-HDN), 5.0 g of photopolymerization initiator 1 (manufactured by Chiba Specialty Chemicals, IRGACURE184), 1.5 g of a surfactant (manufactured by AGC Seimi Chemical Co., Ltd., S420), 1.0 g of polymerization inhibitor 1 (manufactured by Wako Pure Chemical Industries, Ltd., Q1301) and 100 g of toluene were put. The content was stirred for one hour in a state where the interior of the flask was maintained at room temperature in a light shielding state, to obtain photocurable resin 1. The viscosity of photocurable resin 1 was 1,000 mPa·s.

### PREPARATION EXAMPLE 4

Into a 300 mL four-necked flask equipped with a stirrer and a condenser tube, 70 g of tricyclodecane dimethanol diacrylate (manufactured by Shin-Nakamura Chemical Company, Limited, NK esterA-DCP), 30 g of neopentyl glycol diacrylate (manufactured by Shin-Nakamura Chemical Company, Limited, NK ester A-NPG), 5.0 g of photopolymerization initiator 2 (manufactured by Chiba Specialty Chemicals, IRGACURE184), 1.0 g of polymerization inhibitor 1 and 1.5 of a surfactant (manufactured by AGC Seimi Chemical Co., Ltd., S420) were put. The content was stirred for one hour in a state where the interior of the flask was maintained at room temperature in a light shielding state to obtain photocurable resin 2. The viscosity of photocurable resin 2 was 50 mPa·s.

### EXAMPLE 1

Liquid crystal single-layer laminate 1 comprising a transparent resin layer and a horizontally aligned polymer liquid crystal layer was obtained on a glass substrate by carrying out the following steps [a], [b] and [c] in order.

### [a] Preparation of Ultraviolet Curable Resin Layer

Photocurable resin 2 was applied to the surface of a glass substrate by spin coating to prepare an ultraviolet curable resin layer.

### [b] Preparation of Transparent Resin Layer 1

A glass substrate provided with polyimide subjected to rubbing treatment (substrate subjected to horizontal alignment treatment manufactured by EHC) was pressed against the surface of the ultraviolet curable resin layer obtained in [a]. In this step [b], disposition of the substrate subjected to horizontal alignment treatment relative to the glass substrate [a] was adjusted so that the side of the glass substrate [a] was substantially in parallel with the rubbing direction of the substrate subjected to horizontal alignment treatment. Then, the ultraviolet curable resin layer was cured by applying ultraviolet rays with an intensity of 700 mJ to the ultraviolet curable resin layer at room temperature while a state where the substrate subjected to horizontal alignment treatment was pressed against the surface of the ultraviolet curable resin layer was maintained. Then, the substrate subjected to horizontal alignment treatment was separated from the cured ultraviolet curable resin layer to prepare transparent resin layer 1 having rubbing grooves of the substrate subjected to horizontal alignment treatment transcribed. The thickness of transparent resin layer 1 was 8.7 µm.

### [c] Preparation of Polymer Liquid Crystal Layer 1

Curable polymer liquid crystal solution (a-21) was applied to transparent resin layer 1 by spin coating, dried at 50°C for 10 minutes and then held at 100°C for 3 minutes to carry out alignment treatment of the mesogen of crosslinkable polymer liquid crystal (A-2) contained in crosslinkable polymer liquid crystal solution (a-21). By this alignment treatment, the mesogen of crosslinkable polymer liquid crystal (A-2) was aligned on transparent resin layer 1 horizontally to the surface of the glass substrate [a]. Then, ultraviolet rays with an illuminance of 260 mW/cm² were applied at 60°C for 5 minutes in a nitrogen atmosphere to photopolymerize (crosslink) crosslinkable polymer liquid crystal (A-2) thereby to prepare crosslinked polymer liquid crystal layer 1.

As described above, by means of the steps [a], [b] and [c], liquid crystal single-layer laminate 1 comprising transparent resin layer 1 and horizontally aligned polymer liquid crystal layer 1 laminated on a glass substrate in this order was obtained.

### EXAMPLE 2

Liquid crystal single-layer laminate 2 was prepared in the same manner as in Example 1 except that in step [a], photocurable resin 2 was applied on a glass substrate by spin coating and dried at 80°C for 5 minutes to remove toluene thereby to prepare an ultraviolet curable resin layer.

### EXAMPLE 3

Liquid crystal single-layer laminate 3 was prepared in the same manner as in Example 2 except that photocurable resin 2 was changed to photocurable resin 1.

### EXAMPLE 4

Liquid crystal single-layer laminate 4 was prepared in the same manner as in Example 3 except that liquid crystalline monomer solution (C-1) was used instead of crosslinkable polymer liquid crystal solution (b-21).

The thickness, the retardation, the haze, etc. of liquid crystal single-layer laminates obtained in Examples 1 to 4 are shown in Table 5.

**TABLE 5**

| | Example 1 | Example 2 | Example 3 | Example 4 |
|---|---|---|---|---|
| | Liquid crystal single-layer laminate 1 | Liquid crystal single-layer laminate 2 | Liquid crystal single-layer laminate 3 | Liquid crystal single-layer laminate 4 |
| Mold | Glass substrate with polyimide | Glass substrate with polyimide | Glass substrate with polyimide | Glass substrate with polyimide |
| Photocurable resin | 2 | 2 | 1 | 1 |
| Crosslinkable polymer liquid crystal solution/polymerizable liquid crystalline monomer solution | a-21 | b-21 | b-21 | c-1 |
| Thickness (µm) of transparent resin layer 1 | 8.7 | 9.0 | 6.1 | 6.0 |
| Thickness (µm) of polymer liquid crystal layer 1 | 0.93 | 0.90 | 0.91 | 1.22 |
| Retardation | 132 | 137 | 139 | 138 |
| Haze | 0.4 | 0.3 | 0.3 | 0.3 |
| Liquid crystal alignment state | Horizontal | Horizontal | Horizontal | Horizontal |
| Tilt angle of liquid crystal | 0° | 0° | 0° | 0° |

### EXAMPLE 5

Using liquid crystal single-layer laminate 1 obtained in Example 1, the following steps [d] and [e] were carried out in order to obtain liquid crystal multilayer laminate 1.

### [d] Preparation of Alignment-Controlled Layer 2

On polymer liquid crystal layer 1 of liquid crystal single-layer laminate 1, photocurable resin 2 was applied in the same manner as in Example 1 to prepare a ultraviolet curable resin layer. Then, against the surface of the ultraviolet curable resin layer prepared on polymer liquid crystal layer 1, a glass substrate provided with polyimide subjected to rubbing treatment (substrate subjected to horizontal alignment treatment manufactured by EHC) was pressed. On that occasion, disposition of the glass substrate provided with polyimide relative to liquid crystal single-layer laminate 1 was adjusted so that the angle formed by the direction of grooves formed on transparent resin layer 1 in step [b] and the direction of the rubbing grooves on the glass substrate provided with polyimide (hereinafter sometimes referred to as the angle of lamination axis) became 60°. The ultraviolet curable resin layer was cured by applying ultraviolet rays of 700 mJ to the ultraviolet curable resin layer at room temperature while a state where the glass substrate provided with polyimide was pressed against the ultraviolet curable resin layer prepared on polymer liquid crystal layer 1 was maintained. Then, the glass substrate provided with polyimide was separated from the cured ultraviolet curable resin layer to prepare transparent resin layer 2 having rubbing grooves of the glass substrate provided with polyimide transcribed. The thickness of transparent resin layer 2 was 8.5 µm.

### [e] Preparation of Polymer Liquid Crystal Layer 2

Crosslinkable polymer liquid crystal solution (a-22) was applied to transparent resin layer 2 obtained in step [d] by spin coating, dried at 50°C for 10 minutes and maintained at 100°C for 3 minutes to align the mesogen of crosslinkable polymer liquid crystal (A-2) contained in crosslinkable polymer liquid crystal solution (a-22) horizontally to the surface of the glass substrate [a].

Then, ultraviolet rays with an illuminance of 260 mW/cm² were applied at 60°C for 5 minutes in a nitrogen atmosphere to crosslink crosslinkable polymer liquid crystal (A-2) thereby to prepare polymer liquid crystal layer 2.

By carrying out the above steps [d] and [e] in addition to steps [a], [b] and [c], liquid crystal multilayer laminate 1 comprising transparent resin layer 1,horizontally aligned polymer liquid crystal layer 1, transparent resin layer 2 and horizontally aligned polymer liquid crystal layer 2 laminated in this order on the glass substrate in step [a] was obtained.

Then, the glass substrate in step [a] was separated from liquid crystal multilayer laminate 1 to obtain liquid crystal polymer laminated film 1.

### EXAMPLE 6

Liquid crystal polymer laminated film 2 was prepared in the same manner as in Example 5 except that liquid crystal single-layer laminate 1 was changed to liquid crystal single-layer laminate 2 obtained in Example 2, and that materials as identified in Table 6 were used.

### EXAMPLE 7

Liquid crystal polymer laminated film 3 was prepared in the same manner as in Example 5 except that liquid crystal single-layer laminate 1 was changed to liquid crystal single-layer laminate 3 obtained in Example 3, and that materials as identified in Table 6 were used.

### EXAMPLE 8

Liquid crystal polymer laminated film 4 was prepared in the same manner as in Example 5 except that liquid crystal single-layer laminate 1 was changed to liquid crystal single-layer laminate 4 obtained in Example 4, and that materials as identified in Table 6 were used.

The thickness, the retardation, the haze, etc. of liquid crystal polymer laminated films obtained in Examples 5 to 8 are shown in Table 7.

**TABLE 6**

| | Example 5 | Example 6 | Example 7 | Example 8 |
|---|---|---|---|---|
| | Liquid crystal polymer laminated film 1 | Liquid crystal polymer laminated film 2 | Liquid crystal polymer laminated film 3 | Liquid crystal polymer laminated film 4 |
| Mold | Glass substrate with polyimide | Glass substrate with polyimide | Glass substrate with polyimide | Glass substrate with polyimide |
| Liquid crystal single-layer laminate | 1 | 2 | 3 | 4 |
| Photocurable resin | 2 | 2 | 1 | 1 |
| Crosslinkable polymer liquid crystal solution/polymerizable liquid crystalline monomer solution | a-22 | b-22 | b-22 | c-2 |
| Angle of lamination axis | 60° | 60° | 60° | 60° |
| Thickness (µm) of transparent resin layer 2 | 8.5 | 8.9 | 5.9 | 5.9 |
| Thickness (µm) of polymer liquid crystal layer 2 | 1.86 | 1.81 | 1.82 | 2.45 |
| Alignment state of polymer liquid crystal layer 2 | Horizontal | Horizontal | Horizontal | Horizontal |
| Total thickness (µm) of laminated film | 20 | 20 | 15 | 16 |
| Haze | 0.8 | 0.7 | 0.5 | 0.7 |

### [EVALUATION AS WIDE BAND WAVE PLATE]

The retardations and the ellipticities at wavelengths of 450 nm, 550 nm and 650 nm of liquid crystal polymer laminated films 1 to 4 obtained in Example 5 to 8 were measured. The results are shown in Table 7.

**TABLE 7**

| | | Example 5 | Example 6 | Example 7 | Example 8 |
|---|---|---|---|---|---|
| 450 nm | Retardation | 113 | 112 | 114 | 113 |
| | Ellipticity | 0.87 | 0.86 | 0.88 | 0.89 |
| 550 nm | Retardation | 134 | 137 | 139 | 139 |
| | Ellipticity | 0.94 | 0.99 | 0.97 | 0.98 |
| 650 nm | Retardation | 147 | 153 | 155 | 156 |
| | Ellipticity | 0.90 | 0.92 | 0.94 | 0.95 |

As a result, liquid crystal polymer laminated films 1 to 4 have an ellipticity of at least 0.85 at wavelengths of from 450 to 650 nm, and liquid crystal polymer laminated films 1 to 4 were confirmed to function as a wide band quarter-wave plate.

In the foregoing, the embodiment and examples of the present invention were described specifically with reference to drawings. However, the present invention is by no means restricted to such embodiments and examples, and various changes and modifications are possible without departing from the intention and the scope of the present invention.

### INDUSTRIALAPPLICABILITY

At least one of the embodiments and examples of the present invention is applicable to a process for producing a laminate, and a laminate.

The entire disclosure of Japanese Patent Application No. 2009-167213 filed on July 15, 2009 including specification, claims, drawings and summary is incorporated herein by reference in its entirety.

### REFERENCE SYMBOLS

- 10, 20:: Liquid crystal film
- 11:: Support substrate
- 12, 15:: Layer of curable resin
- 12', 21:: Layer of first transparent resin
- 13, 22:: First pattern
- 14, 17:: Layer of polymerizable liquid crystalline material
- 14', 23:: First polymer liquid crystal layer
- 15', 24:: Layer of second transparent resin
- 16, 25:: Second pattern
- 17', 26:: Second polymer liquid crystal layer
- 18:: Mold

## Claims

1. A process for producing a laminate comprising a first transparent resin layer, a first polymer liquid crystal layer, a second transparent resin layer and a second polymer liquid crystal layer, which comprises (1) forming a layer of a first curable resin in contact with a mold face having liquid crystal alignment properties, curing the first curable resin in a state where it is in contact with the mold face to form it into a transparent resin, and separating the mold to form the first transparent resin layer having a face (a) having liquid crystal alignment properties formed by transcription of the mold surface; (2) forming a layer of a liquid crystalline monomer on the face (a) of the first transparent resin layer and aligning the liquid crystalline monomer, and polymerizing the liquid crystalline monomer in a state where the liquid crystalline monomer is aligned, or forming a layer of a crosslinkable polymer liquid crystal on the face (a) of the first transparent resin layer and aligning the crosslinkable polymer liquid crystal, and crosslinking the crosslinkable polymer liquid crystal in a state where the crosslinkable polymer liquid crystal is aligned, to form the first polymer liquid crystal layer; (3) forming a layer of a second curable resin on the side of the first polymer liquid crystal layer, bringing a mold face having liquid crystal alignment properties into contact with the surface of the layer of the second curable resin so that the liquid crystal alignment direction to be formed by transcription of the mold face is different from the liquid crystal alignment direction of the face (a), and curing the second curable resin in a state where it is in contact with the mold face to form it into a transparent resin, and separating the mold to form the second transparent resin layer having a face (b) having liquid crystal alignment properties formed by transcription of the mold surface; and (4) forming a layer of a liquid crystalline monomer on the face (b) of the second transparent resin layer and aligning the liquid crystalline monomer, and polymerizing the liquid crystalline monomer in a state where the liquid crystalline monomer is aligned, or forming a layer of a crosslinkable polymer liquid crystal on the face (b) of the second transparent resin layer and aligning the crosslinkable polymer liquid crystal, and crosslinking the crosslinkable polymer liquid crystal in a state where the crosslinkable polymer liquid crystal is aligned, to form the second polymer liquid crystal layer.

2. The production process according to Claim 1, wherein each of the first curable resin and the second curable resin is a photocurable resin.

3. The production process according to Claim 1 or 2, wherein the liquid crystalline monomer is a compound having at least two groups of at least one type of a polymerizable group selected from an acryloyloxy group and a methacryloyloxy group, and a mesogen group.

4. The production process according to Claim 1 or 2, wherein the crosslinkable polymer liquid crystal is a polymer liquid crystal having at least one type of a crosslinkable group selected from an acryloyloxy group and a methacryloyloxy group introduced into a polymer of a compound having an addition-polymerizable unsaturated group and a mesogen group.

5. The production process according to any one of Claims 1 to 4, wherein the angle formed by the alignment direction of the face (a) and the alignment direction of the face (b) is more than 0° and less than 90°.

6. The production process according to any one of Claims 1 to 5, which further carries out a cycle of formation of a transparent resin layer in accordance with the above (3) and formation of a polymer liquid crystal layer in accordance with the above (4) on the side of the second polymer liquid crystal layer at least once, to produce a laminate having N-layers of transparent resin layers and N-layers of polymer liquid crystal layers (wherein N is an integer of at least 3) wherein the liquid crystal alignment direction of one polymer liquid crystal layer is different from the liquid crystal alignment direction of another polymer liquid crystal layer adjacent to the above polymer liquid crystal layer via a transparent resin layer.

7. A laminate comprising a first transparent resin layer, a first polymer liquid crystal layer, a second transparent resin layer and a second polymer liquid crystal layer, wherein the first transparent resin layer has a face (a) in contact with the first polymer liquid crystal layer, and the face (a) is a face having liquid crystal alignment properties formed by transcription of a mold surface; the first polymer liquid crystal layer is a polymer liquid crystal layer formed by polymerization of a liquid crystalline monomer aligned in contact with the face (a) or by crosslinking of a crosslinkable polymer liquid crystal aligned in contact with the face (a); the second transparent resin layer is formed on the first polymer liquid crystal layer on a side on which it is not in contact with the face (a), and has a face (b) in contact with the second polymer liquid crystal layer, and the face (b) is a face having liquid crystal alignment properties formed by transcription of a mold surface; the second polymer liquid crystal layer is a polymer liquid crystal layer formed by polymerization of a liquid crystalline monomer aligned in contact with the face (b) or by crosslinking of a crosslinkable polymer liquid crystal aligned in contact with the face (b); and the alignment direction of the polymer liquid crystal in the first polymer liquid crystal layer is different from that in the second polymer liquid crystal layer.

8. The laminate according to Claim 7, wherein each of the first transparent resin layer and the second transparent resin layer is a transparent resin layer made of a cured product of a photocurable resin, and each of the face (a) and the face (b) is a face having liquid crystal alignment properties having the mold surface transcribed, formed by curing the photocurable resin in a state where it is in contact with the mold surface having liquid crystal alignment properties.

9. The laminate according to Claim 7 or 8, wherein the liquid crystalline monomer is a compound having at least two groups of at least one type of a polymerizable group selected from an acryloyloxy group and a methacryloyloxy group, and a mesogen group.

10. The laminate according to Claim 7 or 8, wherein the crosslinkable polymer liquid crystal is a polymer liquid crystal having at least one type of a crosslinkable group selected from an acryloyloxy group and a methacryloyloxy group introduced into a polymer of a compound having an addition-polymerizable unsaturated group and a mesogen group.

11. The laminate according to any one of Claims 7 to 10, wherein each of the alignment directions of the polymer liquid crystals of the first polymer liquid crystal layer and the second polymer liquid crystal layer is in parallel with the face of the polymer liquid crystal layer, and directions of the alignment axes of the polymer liquid crystals are different by more than 0° and less than 90°.

12. The laminate according to any one of Claims 7 to 11, which further has at least one combination of the same transparent resin layer as the above transparent resin layer and the same polymer liquid crystal layer as the above polymer liquid crystal layer on the side of the second polymer liquid crystal layer, which has totally N-layers of transparent resin layers and N-layers of polymer liquid crystal layers (wherein N is an integer of at least 3), wherein the liquid crystal alignment direction of one polymer liquid crystal layer is different from the liquid crystal alignment direction of another polymer liquid crystal layer adjacent to the above polymer liquid crystal layer via a transparent resin layer.

13. A wave-plate comprising the laminate as defined in any one of Claims 7 to 12.
